# DEMANDE DE BREVET EUROPEEN

(11) **EP 4 387 323 A1**
(43) Date de publication de la demande: **19.06.2024**
(21) Numéro de dépôt: 23216378.2
(22) Date de dépôt: 13.12.2023
(51) Int. Cl.: H04W 28/02, H04W 36/16

(54) **PROCEDE ET DISPOSITIF DE CATEGORISATION DE FLUX DE DONNEES TRANSITANT ENTRE UNE STATION ET UN POINT D'ACCES SERVANT LA STATION**

(30) Priorité: 16.12.2022 FR 2213525
(71) Demandeur: Sagemcom Broadband SAS, 92270 Bois-Colombes (FR)
(72) Inventeur: LE ROUX, Sylvain, 92270 BOIS-COLOMBES (FR); BAKLOUTI, Mahdi, 92270 BOIS-COLOMBES (FR); JAULIN, Jean-Philippe, 92270 BOIS-COLOMBES (FR); MASSINISSA, Lalam, 92270 BOIS-COLOMBES (FR)
(74) Mandataire: Cabinet Le Guen Maillet

(57) **Abrégé**

La présente invention concerne un procédé et un dispositif de catégorisation de flux de données transitant entre une station et un point d'accès servant la station pour déterminer si la station peut changer de point d'accès la servant. Selon l'invention, le point d'accès servant au moins une station :
- identifie (E300), à partir d'un identifiant de la source et/ou du destinataire de données, chaque flux de données transitant entre la station et le point d'accès,
- mesure (E301), pour chaque flux de données, la quantité de données transitant entre la station et le point d'accès,
- calcule (E302), pour chaque flux de données, une moyenne à partir des mesures pour le flux,
- catégorise (E303) chaque flux de données comme un flux de données interruptible si la moyenne du flux de données est inférieure à un premier seuil prédéterminé,
- détermine que la station peut être servie par un autre point d'accès si chaque flux transitant entre la station et le point d'accès est catégorisé comme un flux de données interruptible.

## Description

### DOMAINE TECHNIQUE

La présente invention concerne un procédé et un dispositif de catégorisation de flux de données transitant entre une station et un point d'accès servant la station pour déterminer si la station servie par le point d'accès noeud peut changer de point d'accès la servant.

### ETAT DE LA TECHNIQUE ANTERIEURE

Dans les réseaux locaux LAN (« Local Area Network » en anglais), des systèmes d'extension de couverture de communication sans-fil peuvent être utilisés afin d'augmenter la portée de ces réseaux locaux LAN en coordonnant plusieurs points d'accès AP (« Access Point » en anglais) répartis. Ces différents points d'accès AP sont intégrés à des noeuds de communication, appelés simplement ci-après noeuds, et mettent tous à disposition un même réseau local sans-fil WLAN (« Wireless Local Area Network ») en anglais.

Les noeuds du sous-réseau d'acheminement sont connectés les uns aux autres grâce à une structure maillée en forme d'arbre, un noeud pouvant alors servir de relais entre deux autres noeuds du sous-réseau d'acheminement. Les noeuds du sous-réseau d'acheminement sont ainsi interconnectés grâce à des liaisons filaires, par exemple de type Ethernet, ou à des liaisons sans fil, par exemple de type Wi-Fi. Les noeuds du sous-réseau d'acheminement sont connectés entre eux par un réseau qu'on appelle aussi « Réseau BackHaul » pouvant être soit filaire, soit sans fil, ou une combinaison des deux.

Chaque noeud du sous-réseau d'acheminement émet éventuellement au moins un réseau sans fil qu'on appelle « Réseau FrontHaul » ou réseau frontal sur lequel se connectent les stations de l'utilisateur. Ce réseau frontal, s'il utilise la technologie Wi-Fi / IEEE 802.11, est l'équivalent de ce qui se nomme BSS (« Basic Service Set » en anglais).

Au moins un des noeuds du sous-réseau d'acheminement est connecté à une passerelle résidentielle « gateway en anglais » qui fournit l'accès au réseau Internet. La passerelle résidentielle peut aussi faire partir du sous-réseau d'acheminement.

Le mécanisme de changement de point d'accès (« handover » en anglais) consiste à déplacer une liaison de communication établie entre une station et un point d'accès, vers un autre point d'accès jugé comme plus apte à assurer la communication avec la station. Ce mécanisme est connu et largement utilisé dans l'ensemble des télécommunications sans fil depuis de nombreuses années.

La structure des interfaces des réseaux locaux utilisant la technologie de communication radio de type Wi-Fi ne permet pas à une station d'être en communication simultanément avec plus d'un point d'accès éventuellement compris dans différents noeuds.

Cette limitation implique qu'un handover provoque implicitement une rupture temporaire du transfert de données entre la station et le point d'accès du fait de la nécessité d'effectuer une déconnexion du point d'accès, une reconfiguration de l'interface de la station, et la connexion au nouveau point d'accès.

Classiquement, les stations comportent une mémoire tampon qui mémorise les données chargées en avance par rapport à leur utilisation pour apporter une solution à une rupture, ou lorsque la vitesse de téléchargement des données est inférieure à la vitesse de leur consommation par l'application considérée.

Néanmoins, cette solution n'est pas optimale car il peut toujours se produire un artefact dans la communication, tel qu'un parasite, dans un son reproduit par la station, l'apparition d'un macrobloc sur un écran de la station, ou une perte d'une commande d'un jeu.

### EXPOSE DE L'INVENTION

La présente invention permet de garantir que les stations qui sont connectées à un point d'accès d'un noeud ne subissent pas d'artéfact dans une communication lorsqu'un handover de la station est effectué.

A cette fin, selon un premier aspect, un mode de réalisation propose un procédé de catégorisation de flux de données transitant entre une station et un point d'accès servant la station pour déterminer si la station servie par le point d'accès peut changer de point d'accès la servant, le point d'accès étant compris dans un noeud faisant partie d'un réseau local comprenant une pluralité de noeuds permettant une extension de couverture de communication sans fil afin d'augmenter la portée du réseau local en coordonnant plusieurs points d'accès intégrés aux noeuds, caractérisé en ce que le procédé comporte les étapes, exécutées par le point d'accès servant au moins une station, de :
- identification, à partir d'un identifiant de la source et/ou du destinataire de données, de chaque flux de données transitant entre la station et le point d'accès,
- mesures, pour chaque flux de données, de la quantité de données transitant entre la station et le point d'accès,
- calcul, pour chaque flux de données, d'une moyenne à partir des mesures pour le flux,
- catégorisation de chaque flux de données comme un flux de données interruptible si la moyenne du flux de données est inférieure à un premier seuil prédéterminé,
- détermination que la station servie par le point d'accès peut être servie par un autre point d'accès si chaque flux transitant entre la station et le point d'accès est catégorisé comme un flux de données interruptible.

Un mode de réalisation concerne aussi un dispositif de catégorisation de flux de données transitant entre une station et un point d'accès servant la station pour déterminer si la station servie par le point d'accès peut changer de point d'accès la servant, le point d'accès étant compris dans un noeud faisant partie d'un réseau local comprenant une pluralité de noeuds permettant une extension de couverture de communication sans fil afin d'augmenter la portée du réseau local en coordonnant plusieurs points d'accès intégrés aux noeuds, caractérisé en ce que le dispositif est compris dans le point d'accès servant une station, et comporte :
- des moyens d'identification, à partir d'un identifiant de la source et/ou du destinataire de données, de chaque flux de données transitant entre la station et le point d'accès,
- des moyens de mesures, pour chaque flux de données, de la quantité de données transitant entre la station et le point d'accès,
- des moyens de calcul, pour chaque flux de données, d'une moyenne à partir des mesures pour le flux,
- des moyens de catégorisation de chaque flux de données comme un flux de données interruptible si la moyenne du flux de données est inférieure à un premier seuil prédéterminé,
- des moyens de détermination que la station servie par le point d'accès peut être servie par un autre point d'accès si chaque flux transitant entre la station et le point d'accès est catégorisé comme un flux de données interruptible.

Ainsi, en effectuant des opérations statistiques sur les flux de donnés, il est possible de catégoriser chaque flux de données, de limiter les effets parasites liés à une rupture inappropriée d'un flux de données considéré comme non interruptible et de limiter les handovers aux flux non critiques et aux situations strictement nécessaires.

Selon un mode de réalisation particulier, le procédé comporte en outre les étapes exécutées, si la moyenne d'au moins un flux de données est supérieure au premier seuil prédéterminé, de :
- calcul, pour chaque flux de données dont la moyenne est supérieure ou égale au premier seuil prédéterminé, d'un écart type à partir des mesures pour le flux,
- calcul, pour chaque flux de données dont la moyenne est supérieure au premier seuil prédéterminé, d'un score à partir de la moyenne et de l'écart type du flux de données,
- catégorisation de chaque flux de données dont la moyenne est supérieure au premier seuil prédéterminé comme un flux de données non interruptible si le score du flux de données est inférieur à un second seuil prédéterminé,
- détermination qu'une station servie par le point d'accès ne doit pas être servie par un autre point d'accès si au moins un flux transitant entre la station et le point d'accès est catégorisé comme un flux de données non interruptible.

Selon un mode de réalisation particulier, le procédé comporte en outre les étapes de :
- catégorisation de chaque flux de données dont la moyenne est supérieure au premier seuil prédéterminé comme un flux de données interruptible si le score du flux de données est supérieur ou égal à un second seuil prédéterminé,
- détermination qu'une station servie par le point d'accès peut être servie par un autre point d'accès si chaque flux transitant entre la station et le point d'accès est catégorisé comme un flux de données interruptible.

Selon un mode de réalisation particulier, chaque score est calculé à partir de la formule suivante :
SC(t) =σ(t)/(K+moy(t)) où moy(t) est la moyenne, SC(t) est le score, σ(t) est l'écart type et K une valeur strictement supérieure à 0.

Selon un mode de réalisation particulier, chaque moyenne est calculée pour une première période de temps prédéterminée.

Selon un mode de réalisation particulier, chaque écart type et chaque score sont calculés pour la première période de temps prédéterminée.

Selon un mode de réalisation particulier, chaque moyenne, chaque écart type et chaque score sont calculés avec une périodicité prédéterminée.

Un mode particulier concerne aussi un produit programme d'ordinateur. Il comprend des instructions pour implémenter, par un équipement, le procédé selon l'un des modes de réalisation précédents, lorsque ledit programme est exécuté par un processeur de l'équipement.

Un mode particulier concerne aussi un support de stockage. Il stocke un programme d'ordinateur comprenant des instructions pour implémenter, par un dispositif noeud, le procédé selon l'un des modes de réalisation précédents, lorsque ledit programme est exécuté par un processeur du dispositif noeud.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] illustre schématiquement un exemple de réseau local dans un mode de réalisation ;
[Fig. 2] illustre schématiquement l'architecture d'un noeud selon un mode de réalisation ;
[Fig. 3] illustre un exemple d'un procédé exécuté par un point d'accès d'un noeud selon un mode de réalisation ;
[Fig. 4a] illustre un exemple de mesures dans une fenêtre glissante de la quantité de données d'un flux de données transitant entre une station servie par un noeud dans un cas où le flux de données est considéré comme interruptible ;
[Fig. 4b] illustre un exemple de scores calculés à partir de la quantité de données d'un flux de données transitant dans une fenêtre glissante entre une station servie par un noeud dans un cas où le flux de données est considéré comme interruptible ;
[Fig. 5a] illustre un exemple de mesures dans une fenêtre glissante de la quantité de données d'un flux de données transitant entre une station servie par un noeud dans un cas où le flux de données est considéré comme non interruptible ;
[Fig. 5b] illustre un exemple de scores calculés à partir de la quantité de données d'un flux de données transitant dans une fenêtre glissante entre une station servie par un noeud dans un cas où le flux de données est considéré comme non interruptible ;
[Fig. 6a] illustre un exemple de mesures dans une fenêtre glissante de la quantité de données d'un flux de données transitant entre une station servie par un noeud dans une situation dans laquelle le flux de données varie entre une catégorisation interruptible et non interruptible ;
[Fig. 6b] illustre un exemple de scores calculés à partir de la quantité de données d'un flux de données transitant dans une fenêtre glissante entre une station servie par un noeud dans une situation dans laquelle le flux de données varie entre une catégorisation interruptible et non interruptible.

### EXPOSE DETAILLE DE MODES DE REALISATION

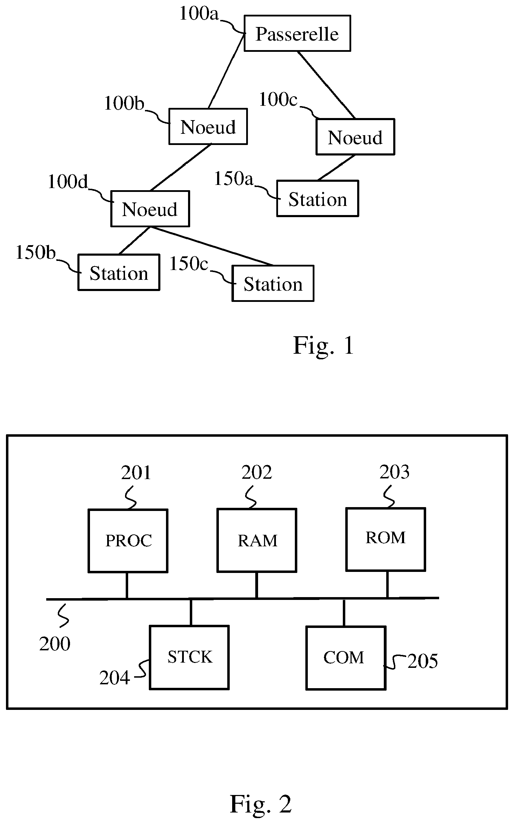

La **Fig. 1** illustre un exemple de réseau local dans un mode de réalisation.

Le réseau local maillé est construit autour d'un sous-réseau d'acheminement comportant un ensemble de noeuds 100a à 100d interconnectés.

Le noeud 100a est par exemple une passerelle résidentielle, (« gateway » en anglais), qui fournit l'accès à un réseau étendu, comme par exemple le réseau Internet.

Les noeuds 100b à 100d sont des systèmes d'extension de couverture de communication sans fil qui sont utilisés afin d'augmenter la portée du réseau local en coordonnant plusieurs points d'accès AP (« Access Point » en anglais) répartis. Ces différents points d'accès AP sont intégrés aux noeuds qui sont interconnectés grâce à un sous-réseau d'acheminement ou d'amenée (« backhaul subnetwork » en anglais) et mettent tous à disposition un même réseau local sans-fil WLAN en anglais. Dans un exemple, les noeuds 100b, 100c et 100d sont des « extenders » de couverture sans fil. Dans un autre exemple, les différents points d'accès, ou un sous-ensemble de ces points d'accès, mettent tous à disposition au moins deux mêmes réseaux locaux sans fil WLAN. L'un des ces réseaux peut correspondre à un réseau sans fil WLAN privé pour des stations connus dudit réseau, tandis que l'autre correspond à un réseau sans fil WLAN public ou invité.

Le noeud 100a peut être compris dans le sous-réseau d'acheminement.

Les noeuds 100a à 100d du sous-réseau d'acheminement sont connectés les uns aux autres grâce à une structure maillée en forme d'arbre, un noeud pouvant alors servir de relais entre deux autres noeuds du sous-réseau d'acheminement. Les noeuds du sous-réseau d'acheminement sont par exemple interconnectés grâce à des liaisons sans-fil.

Chaque noeud du sous-réseau d'acheminement émet au moins un réseau sans fil qu'on appelle « Réseau FrontHaul », ou réseau frontal, sur lequel se connectent les stations de l'utilisateur. Ce réseau frontal, s'il utilise la technologie Wi-Fi / IEEE 802.11, est l'équivalent de ce qui se nomme BSS (Basic Service Set).

Dans l'exemple de la Fig. 1, le noeud 100a est connecté aux noeuds 100b et 100c, le noeud 100b est interconnecté au noeud 100d.

Les stations 150b et 150c sont servies par le noeud 100d et la station 150a est servie par le noeud 100c.

Il est entendu ci-après par le terme « station », un équipement fixe ou mobile utilisant les ressources du réseau local maillé via l'intermédiaire des noeuds dudit réseau local. Dans différents exemples, les équipements, noeuds ou stations, sont respectivement chacun compatibles avec l'une ou plusieurs normes de la famille des standards IEEE 802.11.

Les stations sont par exemple des téléphones intelligents (« smartphone » en anglais) ou une tablette, un ordinateur, une télévision, une unité de stockage en réseau NAS (« Network Attached Storage » en anglais).

La **Fig. 2** illustre schématiquement l'architecture d'un noeud comprenant un point d'accès selon un mode de réalisation.

Selon l'exemple d'architecture matérielle représenté à la Fig. 2, les noeuds 100a à 100d comprennent, reliés par un bus de communication 200 : un processeur ou CPU (« Central Processing Unit » en anglais) 201 ; une mémoire vive RAM (« Random Access Memory » en anglais) 202 ; une mémoire morte ROM (« Read Only Memory » en anglais) 203 ; une unité de stockage telle qu'un disque dur (ou un lecteur de support de stockage, tel qu'un lecteur de cartes SD (« Secure Digital » en anglais) 204 ; au moins une interface de communication 205 permettant au noeud de communiquer avec les équipements du réseau local.

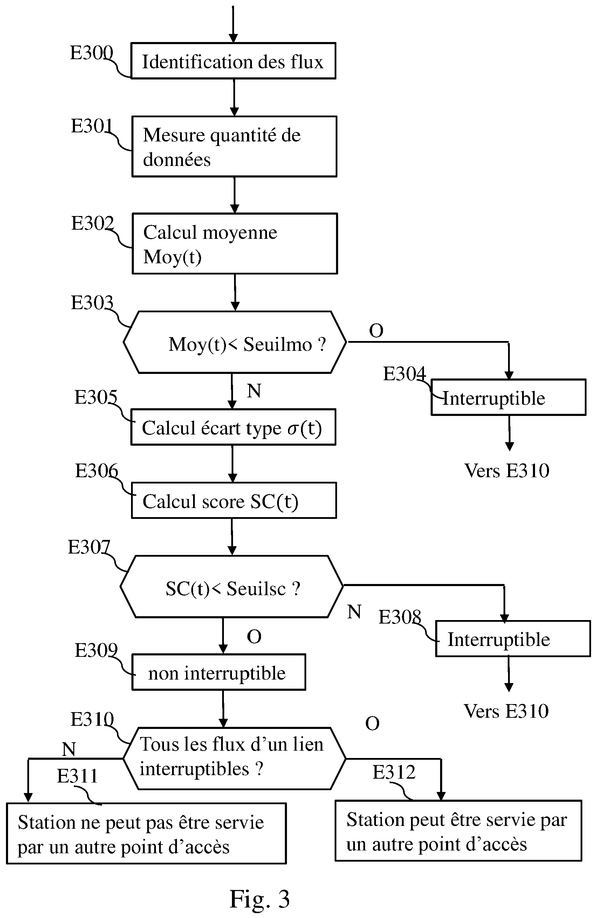

Le processeur 201 est capable d'exécuter des instructions chargées dans la RAM 202 à partir de la ROM 203, d'une mémoire externe (non représentée), d'un support de stockage (tel qu'une carte SD), ou d'un réseau de communication. Lorsque le noeud est mis sous tension, le processeur 201 est capable de lire de la RAM 202 des instructions et de les exécuter. Ces instructions forment un programme d'ordinateur causant la mise en oeuvre, par le processeur 201, de tout ou partie du procédé décrit en relation avec la Fig. 3.

Le procédé décrit ci-après en relation avec la Fig. 3 peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le noeud comprend de la circuiterie électronique configurée pour mettre en oeuvre les procédés décrits en relation avec la Fig. 3.

La **Fig. 3** illustre un exemple d'un procédé exécuté par un point d'accès d'un noeud selon un mode de réalisation.

A l'étape E300, le point d'accès identifie, à partir d'un identifiant de la source et/ou du destinataires de données, chaque flux de données transitant entre le point d'accès et chaque station servie par le point d'accès. L'ensemble des flux de données transitant entre le point d'accès et une station est appelé par la suite lien entre le point d'accès et la station.

Par exemple, le point d'accès identifie les données à destination et/ou émises par chaque station qu'il sert à partir de l'adresse MAC comprise dans les données ou à partir d'une adresse identifiant chaque application de la station émettrice ou réceptrice des données. L'identification peut être effectuée de manière unidirectionnelle ou bidirectionnelle.

A l'étape E301, le point d'accès mesure, pour chaque flux de données, la quantité de données transitant entre la station et le point d'accès.

Par exemple, le point d'accès obtient périodiquement, selon une période P comprise entre 1 et 10 secondes, plus particulièrement une période P égale à 5 secondes, la quantité d'octets Δ(t) ayant transité dans chaque flux pendant une période t. En obtenant le nombre total d'octets ayant transité depuis l'établissement du flux de données périodiquement et en faisant la différence entre les deux valeurs consécutives, on obtient le nombre d'octets ayant transité dans le flux dans l'intervalle de temps P séparant deux instants consécutifs. A l'étape E302, le point d'accès calcule, pour chaque flux, une moyenne moy(t) à partir des nombres d'octets obtenus pour le flux. La moyenne est calculée sur une fenêtre glissante de quelques périodes (10 périodes par exemple) pour obtenir le nombre moyen d'octets transitant dans le flux.

A l'étape E303, le point d'accès compare, pour chaque flux de données, la moyenne avec un premier seuil prédéterminé noté Seuilmo. Le premier seuil prédéterminé est par exemple compris entre 5000 et 8000 octets par période P.

Pour chaque flux, si la moyenne du flux de données est inférieure au premier seuil prédéterminé, le point d'accès passe à l'étape E304 et catégorise le flux de données comme un flux de données interruptible. Cette opération effectuée, le point d'accès passe à l'étape E310.

Si la moyenne d'au moins un flux de données est supérieure ou égale au premier seuil prédéterminé, le point d'accès passe à l'étape E305.

A l'étape E305, le point d'accès calcule, pour chaque flux de données dont la moyenne du flux de données est supérieure ou égale au premier seuil prédéterminé, un écart type sur la même fenêtre glissante que la moyenne. L'écart type caractérise la stabilité du trafic dans le flux au cours du temps. Une faible valeur d'écart type montre un flux relativement stable au cours du temps. On note σ(t) la valeur ainsi obtenue.

A l'étape E306, le point d'accès calcule, pour chaque flux de données dont la moyenne est supérieure au premier seuil prédéterminé, un score à partir de la moyenne et de l'écart type du flux de données.

Chaque score est calculé à partir de la formule suivante :
SC(t) =σ(t)/(K+moy(t)) où SC(t) est le score, σ(t) est l'écart type et K une valeur strictement supérieure à 0, par exemple égale à 0,5 ou 1.

A l'étape E307, le point d'accès compare, pour chaque flux de données dont la moyenne du flux de données est supérieure ou égale au premier seuil prédéterminé, le score SC(t) à un second seuil prédéterminé appelé Seuilsc. Le second seuil prédéterminé est par exemple compris entre 0,45 et 0,55.

Pour chaque flux dont la moyenne du flux de données est supérieure ou égale au premier seuil prédéterminé et le score est inférieur ou égal au second seuil prédéterminé, le point d'accès passe à l'étape E309 et catégorise le flux de données comme un flux de données non interruptible. Cette opération effectuée, le point d'accès passe à l'étape E310.

Pour chaque flux dont la moyenne du flux de données est supérieure ou égale au premier seuil prédéterminé et le score est supérieur au second seuil prédéterminé, le point d'accès passe à l'étape E308 et catégorise le flux de données comme un flux de données interruptible. Cette opération effectuée, le point d'accès passe à l'étape E310.

A l'étape E310, le point d'accès vérifie si tous les flux de données d'un lien sont interruptibles. Si tous les flux de données d'un lien sont interruptibles, le point d'accès passe à l'étape E312. Si au moins un flux de données d'un lien est non interruptible, le point d'accès passe à l'étape E311.A l'étape E311, le point d'accès détermine qu'une station servie par le point d'accès ne doit pas être servie par un autre point d'accès si au moins un flux de données du lien entre la station et le point d'accès est catégorisé comme un flux de données non interruptible.

A l'étape E308, le point d'accès détermine qu'une station servie par le point d'accès peut être servie par un autre point d'accès si chaque flux de données du lien entre la station et le point d'accès est catégorisé comme un flux de données interruptible.

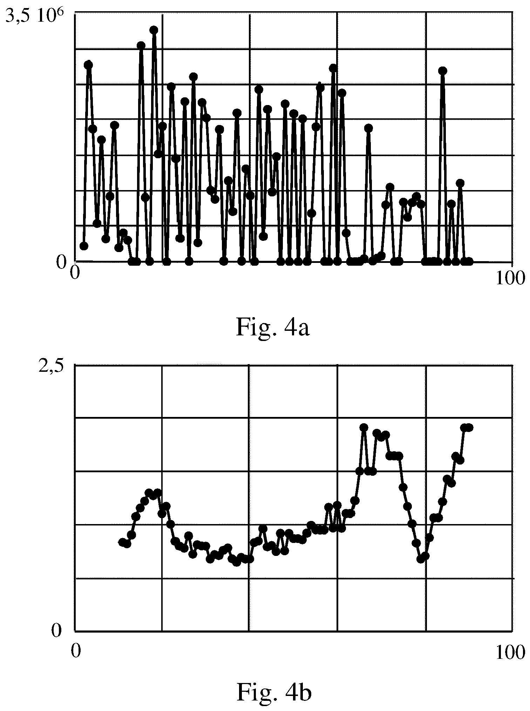

Les Figs. 4a et 4b illustrent respectivement un exemple de mesures sur une fenêtre glissante de la quantité de données Δ(t) d'un flux de données transitant entre une station servie par un noeud et de scores SC(t) dans un cas où le flux de données est considéré comme interruptible.

Les flux de données interruptibles sont par exemple une lecture audiovisuelle en diffusion en flux continu (streaming en anglais) ou une navigation sur Internet.

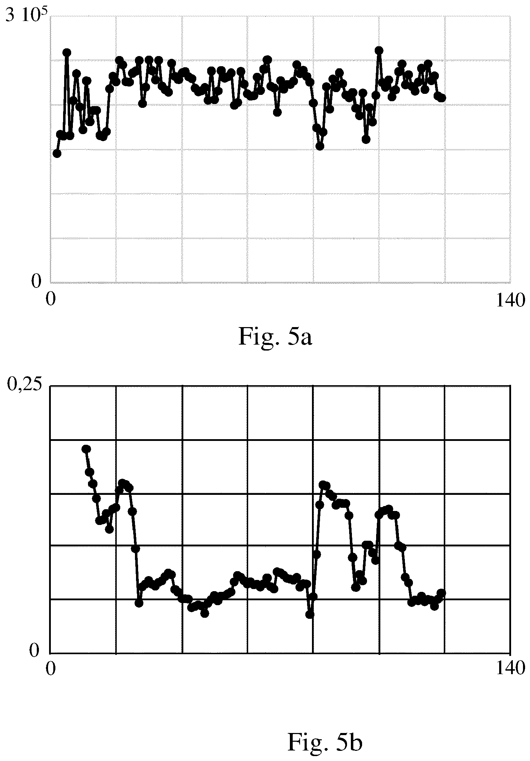

Comme cela est montré dans les Figs. 4a et 4b, les flux de données interruptibles se caractérisent principalement par un débit très variable dans le temps induisant des quantités de données Δ(t) très variable dans le temps. En effet, ils sont constitués de salves pendant lesquelles le débit est élevé, voire très élevé, séparées par des périodes où le débit est très faible, voire nul. Ces salves permettent le remplissage de mémoires (par exemple dans le cas d'un trafic de type diffusion en flux continu) ou le chargement d'un élément (par exemple lors du chargement des résultats suite à une requête sur un moteur de recherche). Les Figs. 5a et 5b illustrent respectivement un exemple de mesures sur une fenêtre glissante de la quantité de données Δ(t) d'un flux de données transitant entre une station servie par un noeud et de scores SC(t) dans un cas où le flux de données est considéré comme non interruptible.

Les flux de données non interruptibles sont par exemples des flux de données d'une conversation téléphonique, ou d'une visioconférence, ou de jeux vidéo interactifs. Comme cela est montré dans les Figs. 5a et 5b, les flux de données non interruptibles se caractérisent principalement par un débit assez stable au cours du temps et pas trop faible. En effet, le trafic à émettre (ou recevoir) est généré au cours du temps et ne peut pas être anticipé. Il doit donc être émis dès qu'il est généré.

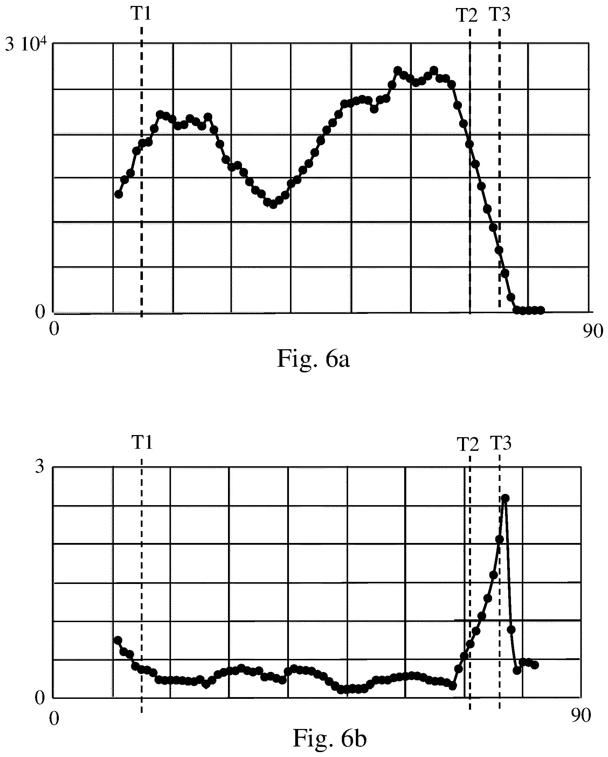

Les Figs. 6a et 6b illustrent respectivement un exemple de mesures sur une fenêtre glissante de la quantité de données Δ(t) d'un flux de données transitant entre une station servie par un noeud dans une situation et de scores SC(t) dans laquelle le flux de données varie entre une catégorisation interruptible et non interruptible.

Une station peut au cours du temps recevoir ou émettre des flux de données interruptibles et non interruptibles.

Comme cela est montré dans les Figs. 6a et 6b, le flux de données pour une station est initialement interruptible (t < T1) du fait du score supérieur au second seuil prédéterminé. Le flux de données pour la station devient ensuite non interruptible entre T1 et T2, toujours à cause du seuil qui est cette fois inférieur au second seuil prédéterminé pour finalement redevenir interruptible à cause de la moyenne qui devient inférieure au premier seuil prédéterminé.

## Revendications

1. Procédé de catégorisation de flux de données transitant entre une station et un point d'accès servant la station pour déterminer si la station servie par le point d'accès peut changer de point d'accès la servant, le point d'accès étant compris dans un noeud faisant partie d'un réseau local comprenant une pluralité de noeuds permettant une extension de couverture de communication sans fil afin d'augmenter la portée du réseau local en coordonnant plusieurs points d'accès intégrés aux noeuds, **caractérisé en ce que** le procédé comporte les étapes, exécutées par le point d'accès servant au moins une station, de :
- identification (E300), à partir d'un identifiant de la source et/ou du destinataire de données, de chaque flux de données transitant entre la station et le point d'accès,
- mesures (E301), pour chaque flux de données, de la quantité de données transitant entre la station et le point d'accès,
- calcul (E302), pour chaque flux de données, d'une moyenne à partir des mesures pour le flux,
- catégorisation (E303) de chaque flux de données comme un flux de données interruptible si la moyenne du flux de données est inférieure à un premier seuil prédéterminé,
- détermination (E312) que la station servie par le point d'accès peut être servie par un autre point d'accès si chaque flux transitant entre la station et le point d'accès est catégorisé comme un flux de données interruptible.

2. Procédé selon la revendication 1, **caractérisé en ce que** le procédé comporte en outre les étapes exécutées, si la moyenne d'au moins un flux de données est supérieure au premier seuil prédéterminé, de :
- calcul (E305), pour chaque flux de données dont la moyenne est supérieure ou égale au premier seuil prédéterminé, d'un écart type à partir des mesures pour le flux,
- calcul (E306), pour chaque flux de données dont la moyenne est supérieure au premier seuil prédéterminé, d'un score à partir de la moyenne et de l'écart type du flux de données,
- catégorisation (E307) de chaque flux de données dont la moyenne est supérieure au premier seuil prédéterminé comme un flux de données non interruptible si le score du flux de données est inférieur à un second seuil prédéterminé,
- détermination (E311) qu'une station servie par le point d'accès ne doit pas être servie par un autre point d'accès si au moins un flux transitant entre la station et le point d'accès est catégorisé comme un flux de données non interruptible.

3. Procédé selon la revendication 2, **caractérisé en ce que** le procédé comporte en outre les étapes de :
- catégorisation (E308) de chaque flux de données dont la moyenne est supérieure au premier seuil prédéterminé comme un flux de données interruptible si le score du flux de données est supérieur ou égal à un second prédéterminé,
- détermination qu'une station servie par le point d'accès peut être servie par un autre point d'accès si chaque flux transitant entre la station et le point d'accès est catégorisé comme un flux de données interruptible.

4. Procédé selon la revendication 2 ou 3, **caractérisé en ce que** chaque score est calculé à partir de la formule suivante :
SC(t) =σ(t)/(K+moy(t)) où moy(t) est la moyenne, SC(t) est le score, σ(t) est l'écart type et K une valeur strictement supérieure à 0.

5. Procédé selon l'une quelconque des revendications 1 à 3, **caractérisé en ce que** chaque moyenne est calculée pour une première période de temps prédéterminée.

6. Procédé selon les revendications 2 et 3, **caractérisé en ce que** chaque écart type et chaque score sont calculés pour la première période de temps prédéterminée.

7. Procédé selon la revendication 6, **caractérisé en ce que** chaque moyenne, chaque écart type et chaque score sont calculés avec une périodicité prédéterminée.

8. Dispositif de catégorisation de flux de données transitant entre une station et un point d'accès servant la station pour déterminer si la station servie par le point d'accès peut changer de point d'accès la servant, le point d'accès étant compris dans un noeud faisant partie d'un réseau local comprenant une pluralité de noeuds permettant une extension de couverture de communication sans fil afin d'augmenter la portée du réseau local en coordonnant plusieurs points d'accès intégrés aux noeuds, **caractérisé en ce que** le dispositif est compris dans le point d'accès servant une station, et comporte :
- des moyens d'identification, à partir d'un identifiant de la source et/ou du destinataire de données, de chaque flux de données transitant entre la station et le point d'accès,
- des moyens de mesures, pour chaque flux de données, de la quantité de données transitant entre la station et le point d'accès,
- des moyens de calcul, pour chaque flux de données, d'une moyenne à partir des mesures pour le flux,
- des moyens de catégorisation de chaque flux de données comme un flux de données interruptible si la moyenne du flux de données est inférieure à un premier seuil prédéterminé,
- des moyens de détermination que la station servie par le point d'accès peut être servie par un autre point d'accès si chaque flux transitant entre la station et le point d'accès est catégorisé comme un flux de données interruptible.

9. Un produit programme d'ordinateur **caractérisé en ce qu'**il comprend des instructions pour implémenter, par un équipement, le procédé selon l'une quelconque des revendications 1 à 7, lorsque ledit programme est exécuté par un processeur d'un noeud.

10. Un support de stockage **caractérisé en ce qu'**il stocke un programme d'ordinateur comprenant des instructions pour implémenter, par un équipement, le procédé selon l'une quelconque des revendications 1 à 7, lorsque ledit programme est exécuté par un processeur d'un noeud.
